# EUROPEAN PATENT APPLICATION

(11) **EP 4 793 215 A2**
(43) Date of publication of application: **19.08.2026**
(21) Application number: 26184641.4
(22) Date of filing: 11.06.2026
(51) Int. Cl.: B65H 75/44

(54) **SMART WALL-MOUNTED CAR WASHER**

(30) Priority: 15.05.2026 CN 202610669768
(71) Applicant: Ningbo Huaxun Clean Machinery Co.,Ltd., Ningbo City Zhejiang Province 315000 (CN)
(72) Inventor: YI, Shanjin, Ningbo City, 315000 (CN); CHEN, Xuan, Ningbo City, 315000 (CN); CHEN, Chuangye, Ningbo City, 315000 (CN); ZHU, Wei, Ningbo City, 315000 (CN)
(74) Representative: Valet Patent Services Limited

(57) **Abstract**

The present invention relates to the technical field of cleaning machines, in particular to a smart wall-mounted car washer, comprising a housing (1) and a hose winding mechanism. The hose winding mechanism comprises a speed reduction motor (2), a clutch (3) and a winding drum (4) which are in transmission connection, the clutch (3) comprises a rotating shaft (5), a first gear (6), a second gear (7) and a locking member (8), the first gear (6) is in transmission connection with the speed reduction motor (2), the second gear (7) is in transmission connection with the winding drum (4), friction plates (9, 10) are fixedly arranged on end surfaces of opposite sides of the two gears (6,7), ball spring components (14, 15) are arranged between the two friction plates (9, 10), and the clutch (3) further comprises an anti-reversal component. The car washer can achieve orderly winding and regular arrangement of the high-pressure water hose, and support quick removal, installation and replacement of the high-pressure water hose.

## Description

### TECHNICAL FIELD

The present invention relates to the technical field of cleaning machines, in particular to a smart wall-mounted car washer.

### BACKGROUND

A wall-mounted car washer is a cleaning device that can be fixed on a wall, and has the core working principle of applying multi-stage pressurization to the water flow through a high-pressure water conversion device (usually a high-pressure plunger pump) to raise the water pressure to over several hundred atmospheres and then spraying the water flow out through a high-pressure water gun to achieve powerful cleaning.

The wall-mounted car washer is usually provided with a hose winding mechanism to achieve the automatic winding and manual unwinding of a high-pressure water hose. In the prior art, the hose winding mechanisms generally adopt a combined transmission structure form of a speed reduction motor, a clutch and a winding drum.

However, the existing hose winding mechanisms have obvious defects:
First, a traditional clutch is not an integrated modular structure and cannot be pre-assembled as an independent assembly, and only the scattered parts and components of the clutch can be assembled step by step into the housing of the car washer one by one; during the assembly process, the parts and components need to be positioned and aligned one by one, the installation procedures are cumbersome, and the assembly efficiency is low; and moreover, after the clutch is assembled, it is impossible to conduct overall performance debugging and pre-delivery inspection separately, calibration can only be conducted after the entire machine is assembled, and maintenance, removal and installation are also extremely inconvenient.

Second, the existing clutches only have the basic clutch transmission function and do not have a mechanical anti-reversal limit structure. When a user manually pulls out the high-pressure water hose, the reversal of the winding drum will drive the transmission chain in the opposite direction, which in turn drives the speed reduction motor to rotate along, and the user needs to overcome the operation damping of the speed reduction motor and the reduction gearbox additionally, so the user feels heavy when pulling the hose and has poor operation experience; and meanwhile, reversely dragging the speed reduction motor to operate for a long term can easily cause damage to the internal coils of the speed reduction motor, significantly shorten the service life of the entire machine, and increase the failure rate.

### SUMMARY

A technical problem to be solved by the present invention is to provide a smart wall-mounted car washer, aiming to solve the technical problems mentioned in the background.

The present invention adopts the following technical solution: a smart wall-mounted car washer comprises a housing and a hose winding mechanism arranged in the housing, wherein the hose winding mechanism comprises a speed reduction motor, a clutch and a winding drum, the speed reduction motor, the clutch and the winding drum are arranged in sequence along a direction of power transmission and are in transmission connection step by step, the clutch comprises a rotating shaft, a first gear and a second gear which are rotatably connected to the rotating shaft, and a locking member for limiting the two gears to the rotating shaft, the first gear is in transmission connection with an output end of the speed reduction motor, the second gear is in transmission connection with one side of the winding drum, friction plates are fixedly arranged on end surfaces of opposite sides of the two gears and are a first friction plate and a second friction plate respectively, ball spring components are arranged between the two friction plates, the clutch further comprises an anti-reversal component, the anti-reversal component comprises tooth grooves arranged on the first friction plate, spring pieces with one end extended into the tooth groove and matched with the tooth groove, and a bracket fixed on the housing and used for fixing the other end of the spring pieces, a wall of one side of the tooth grooves is a vertical groove wall, and a wall of the other side of the tooth grooves is an inclined groove wall.

When in the winding state, the speed reduction motor works to drive the first gear to rotate forward, the spring pieces will move along the inclined groove wall, and at this moment, the first gear can rotate forward;

When in the unwinding state, the winding drum drives the second gear to reverse, the spring pieces will press against the vertical groove wall to lock the first friction plate, and at this moment, the first gear cannot reverse.

Preferably, the first friction plate comprises an inner ring and an outer ring, the ball spring components comprise balls and springs, the inner ring is uniformly provided with through holes for the balls to extend, one end of the springs is pressed against the first gear, the other end of the springs is pressed against the balls, the outer ring of the first friction plate is uniformly provided with the tooth grooves, and the cross-sectional shape of the tooth grooves is a right trapezoid.

Preferably, the second friction plate is uniformly provided with a plurality of arc grooves along a circumferential direction for the balls to be embedded.

Preferably, the distance between the first friction plate and the second friction plate is 0.8-1.2 mm.

Preferably, the number of the spring pieces is two, the two spring pieces are respectively arranged on both sides of the bracket, each spring piece comprises a contact part extended into the tooth groove and a mounting part fixed on the bracket, the contact part is inclined, the contact part and the mounting part are integrally formed, and an inclination angle of the contact part is greater than that of the inclined groove wall.

Preferably, the bracket is fixed on the housing through at least three fixed points, and a middle part of the bracket is also provided with a fixed part for fixing the rotating shaft.

Preferably, the housing is provided with a hose outlet, an inner side of the hose outlet is provided with a moving component for driving a high-pressure water hose to move left and right, the moving component is in transmission connection with the other side of the winding drum, and if the diameter of the high-pressure water hose is set to X, when the speed reduction motor drives the winding drum to rotate one full turn, the moving component drives the high-pressure water hose to move by a distance of X.

Preferably, the moving component comprises a bidirectional screw rod in transmission connection with the other side of the winding drum, a guiding component used for being in threaded fit with the bidirectional screw rod, and a roller component arranged on the guiding component for reducing friction damping when the high-pressure water hose is moved.

Preferably, one side of the winding drum is provided with an accommodating groove, a rack is arranged on a wall of the accommodating groove, the second gear is meshed with the rack, a quick-plug component for connecting the high-pressure water hose is arranged in the accommodating groove, the housing is provided with a hose replacing port in a position corresponding to the quick-plug component, and the housing is also provided with a decorative panel for covering the hose replacing port.

Preferably, the quick-plug component comprises a high-pressure hose connector with a groove, a quick-plug connector with slots provided on both sides and communicated with an internal channel, a clamping pin used for being embedded into the slots and the groove to lock the high-pressure hose connector installed in the quick-plug connector, and a button used for driving the clamping pin to move and thus releasing the clamping pin from the groove.

Compared with the prior art, the present invention has the following advantages due to adoption of the above structure:
1. The clutch can be independently and modularly assembled as a whole in advance, and then assembled as a whole into the housing of the car washer, without the need to position and assemble scattered parts and components one by one, which not only greatly simplifies the assembly procedures and improves the installation efficiency of the entire machine, but also allows for the performance debugging and pre-delivery inspection of the clutch separately after the pre-assembly is completed, and facilitates later removal, installation and maintenance.
2. The clutch is integrated with an anti-reversal structure, which, during the operation of manually pulling out the hose, can effectively prevent the reverse torque from being transmitted in reverse to the speed reduction motor, avoid the speed reduction motor being reversely dragged to reverse, significantly reduce the damping of hose pulling, improve the operation feel, and effectively protect the speed reduction motor, thereby extending the service life of the entire machine.
3. The present invention is equivalent to adding a locking function to the winding drum through the clutch. In this way, when an instantaneous impact load is generated during the operation of turning on and off the water gun, it is less likely to cause the winding drum to shake, which can maintain the stable posture of the winding drum very well, effectively avoiding problems such as looseness and disordered and uneven arrangement of the high-pressure water hose.
4. The present invention, by properly matching the transmission ratio of the moving component and the speed reduction motor, enables the moving component to precisely drive the high-pressure water hose to travel by a distance of one hose diameter when the speed reduction motor drives the winding drum to rotate one full turn, achieving neat and orderly arrangement and winding of the high-pressure water hose, avoiding the stacking, disorder, squeezing and bending of the hose, and significantly improving the regularity of hose storage and the effect of hose winding.
5. The housing is provided with a dedicated hose replacing port, achieving rapid removal and installation of the high-pressure water hose in conjunction with the quick-plug component. When the high-pressure water hose needs to be replaced due to damage or aging, the water hose can be quickly removed and replaced through the quick-plug component at the hose replacing port without the need to disassemble the entire housing, so the maintenance operation is simple, convenient, time-saving and labor-saving.

### DESCRIPTION OF DRAWINGS

Fig. 1 is a structural schematic diagram of a smart wall-mounted car washer.
Fig. 2 is a structural schematic diagram of a smart wall-mounted car washer with decorating parts removed on one side.
Fig. 3 is a structural schematic diagram of a smart wall-mounted car washer with a housing removed on one side.
Fig. 4 is a structural schematic diagram of a smart wall-mounted car washer with a housing removed on the other side.
Fig. 5 is a structural schematic diagram of a clutch.
Fig. 6 is an exploded schematic diagram of a clutch.
Fig. 7 is a structural schematic diagram of a first friction plate.
Fig. 8 is a structural schematic diagram of a second friction plate.
Fig. 9 is a structural schematic diagram of a spring piece.
Fig. 10 is a structural schematic diagram of a moving component.
Fig. 11 is a structural schematic diagram of a guide wheel.
Fig. 12 is a structural schematic diagram of a quick-plug component.
Fig. 13 is an exploded schematic diagram of a quick-plug component.

In the figures: 1. housing; 2. speed reduction motor; 3. clutch; 4. winding drum; 5. rotating shaft; 6. first gear; 7. second gear; 8. locking member; 9. first friction plate; 10. second friction plate; 11. tooth groove; 12. spring piece; 13. bracket; 14. ball; 15. spring; 16. through hole; 17. arc groove; 18. contact part; 19. mounting part; 20. hanger; 21. fixed point; 22. fixed part; 23. hose outlet; 24. moving component; 25. bidirectional screw rod; 26. guiding component; 27. roller component; 28. guide wheel; 29. accommodating groove; 30. rack; 31. quick-plug component; 32. hose replacing port; 33. decorative panel; 34. high-pressure hose connector; 35. groove; 36. quick-plug connector; 37. slot; 38. clamping pin; 39. button; 40. first shaft sleeve; 41. second shaft sleeve; 42. first bearing; 43. second bearing; 44. bearing bracket.

### DETAILED DESCRIPTION

Embodiments of the present invention will be described below in detail. Examples of the embodiments are shown in drawings, wherein same or similar reference signs refer to same or similar elements or elements having same or similar functions from beginning to end. Embodiments described below by reference to the drawings are exemplary embodiments, and are used for explaining the present invention, and shall not be understood as a limitation to the present invention.

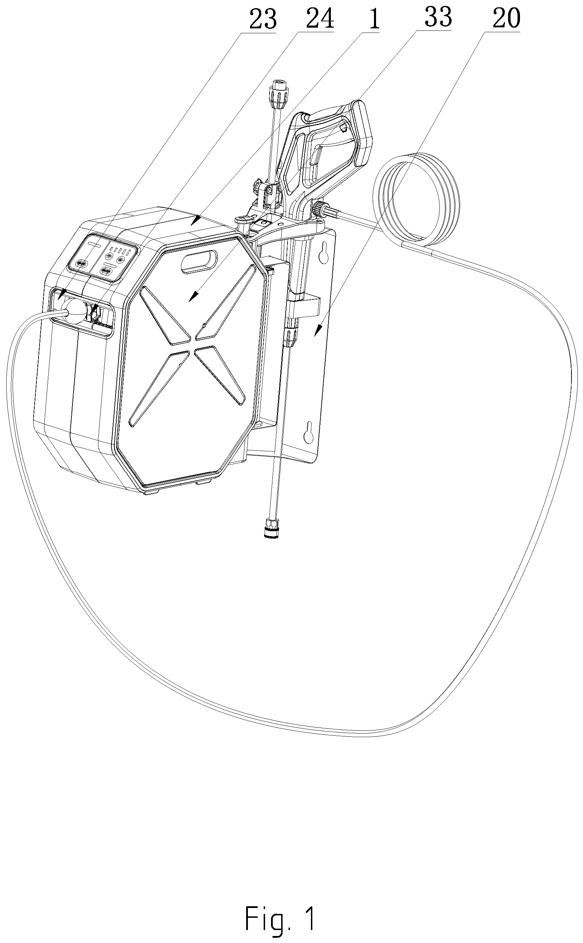

A wall-mounted car washer, as shown in Fig. 1, comprises a main body, a hanger 20, a high-pressure water gun and a high-pressure water hose, the hanger 20 is fixed on a wall, the main body is hung on the hanger 20, the high-pressure water gun is connected to the interior of the main body through the high-pressure water hose, and the main body comprises a housing 1, a plunger pump, a water outlet connector component, a speed reduction motor 2, a clutch 3, a winding drum 4 and a moving component 24, wherein:

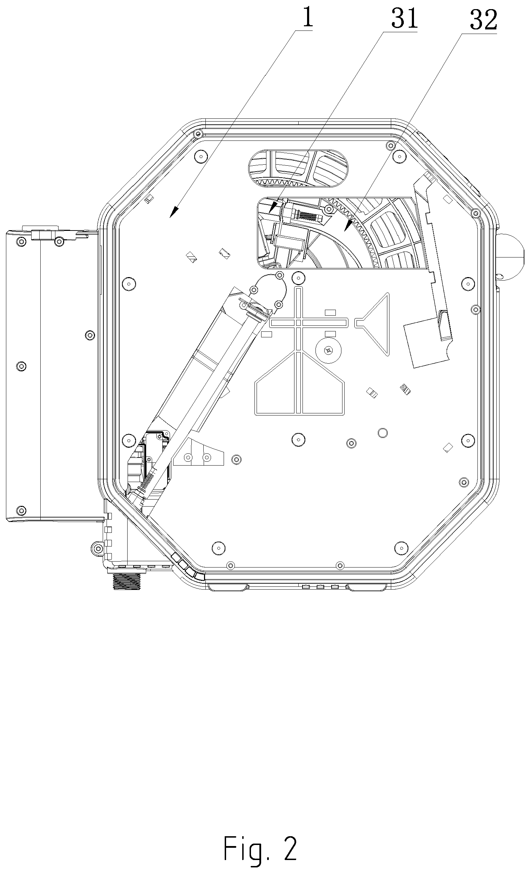

The housing 1 comprises a left housing and a right housing which are locked and fixed through screws, a front part of the housing 1 is provided with a hose outlet 23 for the high-pressure water hose to extend, the moving component 24 is arranged on an inner side of the hose outlet 23 for driving the high-pressure water hose to move left and right, a control panel is arranged above the hose outlet 23, the control panel is provided with control buttons, mainly comprising a pressure regulating button, a machine start/stop button and a hose winding button which are used for controlling the whole power and the start/stop of the car washer and the winding of the high-pressure water hose, a decorative panel 33 is arranged outside the left housing and the right housing, and the left housing and the right housing can be exposed after the decorative panel 33 is removed. As shown in Fig. 2, the left housing is provided with a hose replacing port 32, and the hose replacing port 32 corresponds to the position of a quick-plug component 31. That is, when rotating, the winding drum 4 can always rotate to a position where the quick-connect component 31 is exposed from the hose replacing port 32.

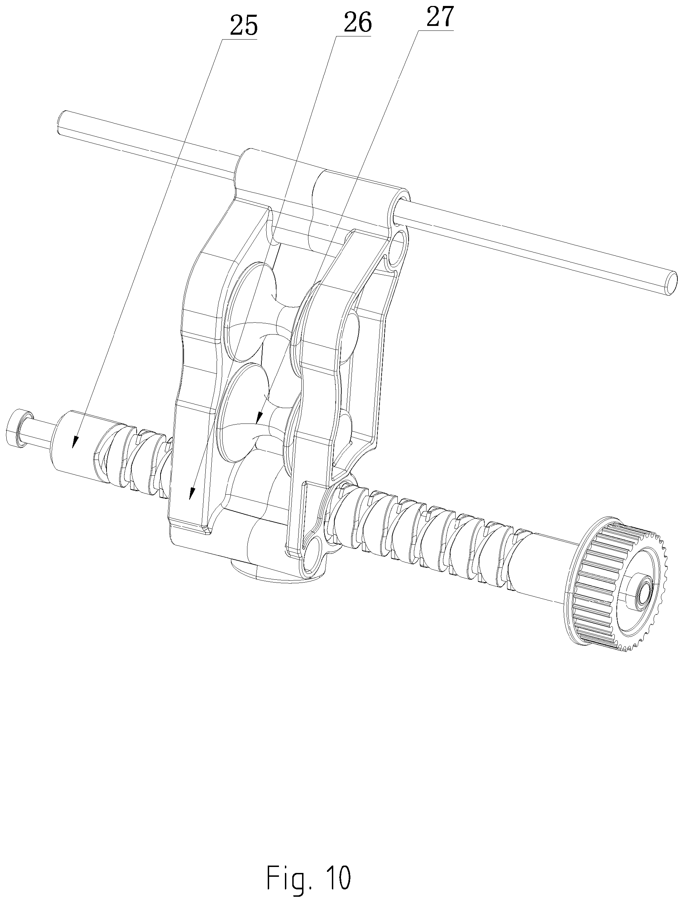

The moving component 24, as shown in Fig. 10, comprises a bidirectional screw rod 25, a guiding component 26 and a roller component 27, wherein:

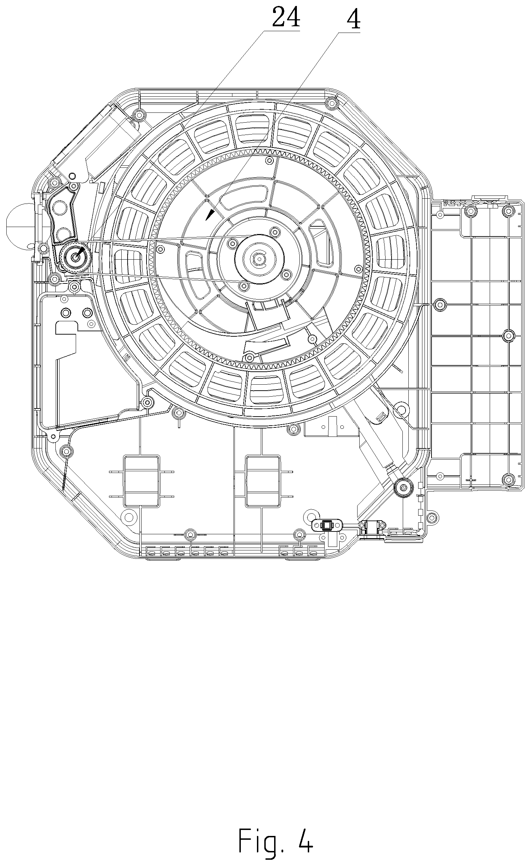

The bidirectional screw rod 25 is rotatably connected inside the housing 1 and is provided with a bidirectional thread groove, as shown in Fig. 4, and one end of the bidirectional screw rod 25 is in transmission connection to the other end of the winding drum 4 through a belt, that is, when rotating, the winding drum 4 will drive the bidirectional screw rod 25 to rotate.

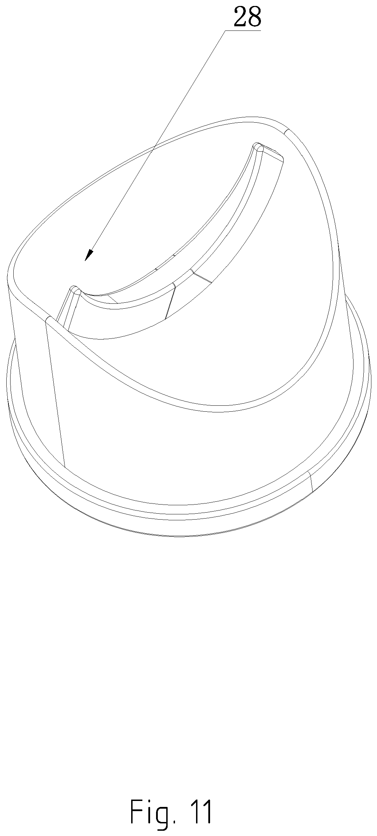

The guiding component 26 comprises a guide wheel 28, a left stopper and a right stopper, as shown in Fig. 11, the main body of the guide wheel 28 is cylindrical and is provided with a limit retaining ring at the bottom, an upper end surface is an arc surface, and the arc surface is provided with a convex rib which can be embedded into the thread groove. After the left stopper and the right stopper are combined, an accommodating cavity for holding the guide wheel 28 is formed below. A lower part of the accommodating cavity is provided with a limit groove by matching with the limit retaining ring of the guide wheel 28, and the guide wheel 28 can be restricted by the limit retaining ring and the limit groove to only rotate horizontally instead of moving vertically.

The roller component 27 comprises two rollers fixed between the left stopper and the right stopper, and a hole is arranged between the two rollers for one high-pressure water hose to pass through, so that the high-pressure water hose has smaller friction damping when moving between the two rollers.

The moving component 24 has the working principle that: since the guide wheel 28 is confined in the accommodating cavity, when the bidirectional screw rod 25 rotates, the guide wheel 28 can only move horizontally with the thread groove, and when moving to one end of the bidirectional screw rod 25, the guide wheel 28 will rotate horizontally at a certain angle within the accommodating cavity, so that the convex rib on the guide wheel 28 rotates from the thread groove in one direction to the thread groove in another direction.

When in the winding state, the speed reduction motor 2 works to drive the winding drum 4 to rotate, and the winding drum 4 will in turn drive the moving component 24 to move; and when the winding drum 4 rotates one full turn, the moving component 24 will drive the high-pressure water hose to move horizontally by a distance of one diameter of the high-pressure water hose, so that the high-pressure water hose can be neatly arranged and wound around the winding drum 4.

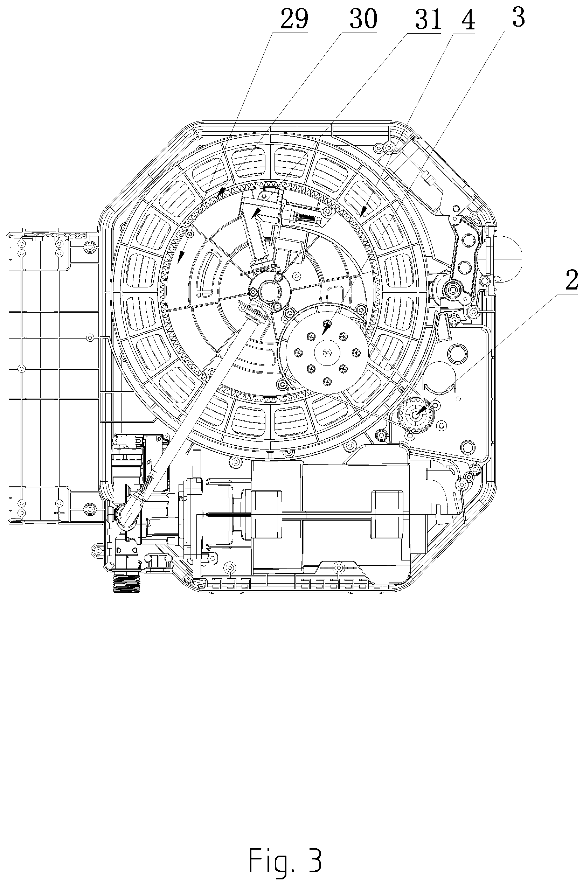

The plunger pump, as shown in Fig. 3, is installed at a lower part inside the housing 1 and is mainly to apply multi-stage pressurization to the external incoming water and then deliver the water to the high-pressure water hose just like the plunger pump in the high-pressure cleaner in the prior art.

The speed reduction motor 2, comprising a motor and a reduction gearbox, as shown in Fig. 3, is arranged at an upper right part of the plunger pump, mainly providing power for winding the hose, and an output shaft thereof is in transmission connection with the clutch 3 through a belt.

The water outlet connector component mainly comprises a pipeline communicated with the plunger pump and the quick-plug component 31 communicated with the high-pressure water hose.

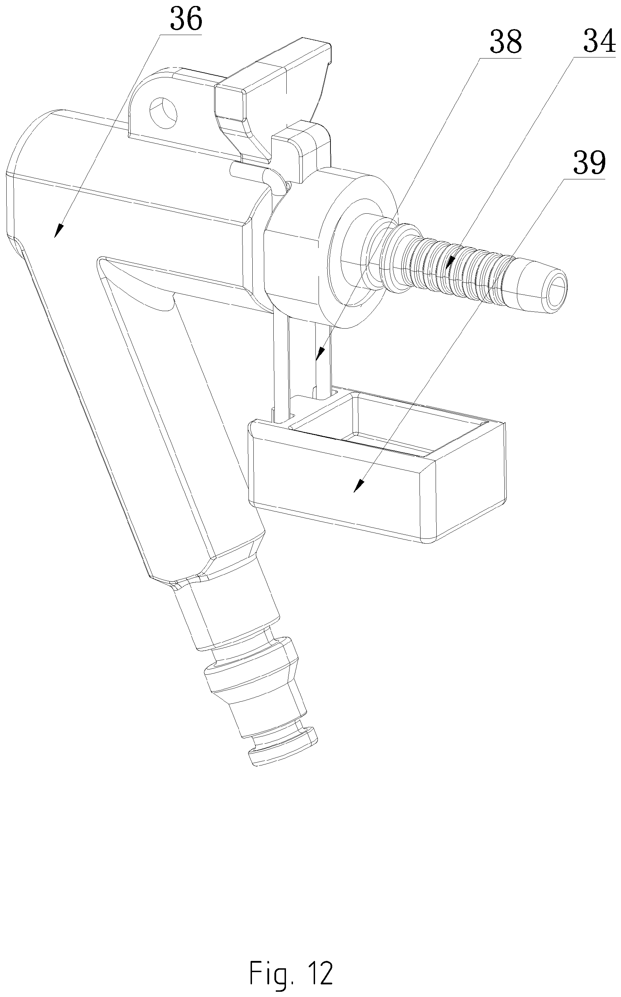

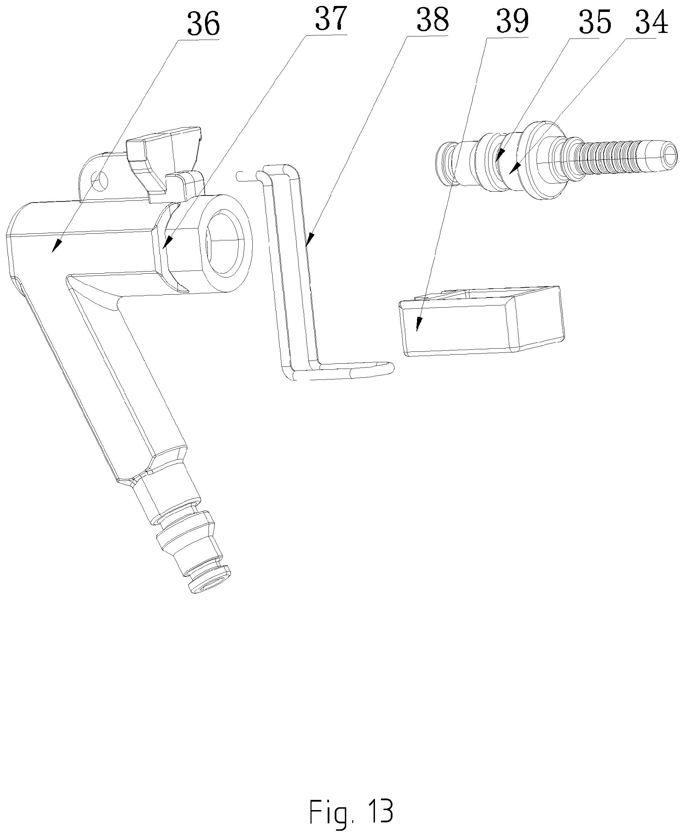

The quick-plug component 31, as shown in Fig. 12 and Fig. 13, comprises a quick-plug connector 36, a high-pressure hose connector 34, a clamping pin 38 and a button 39, wherein:

The quick-plug connector 36 is integrally in a shape of number 7 and is provided with a channel inside, one end thereof is provided with a mounting port for the high-pressure hose connector 34 to be inserted, slots 37 are arranged on both sides of the mounting port, the slots 37 are communicated with the mounting port, an inverted trapezoidal stopper is arranged above the mounting port, two inclined surfaces are arranged on both sides of the inverted trapezoidal stopper, and the two inclined surfaces are used for supporting an upper end of the clamping pin 38 and thereby strutting the clamping pin 38.

The high-pressure hose connector 34 is provided with a groove 35, so that after the high-pressure hose connector 34 is installed in place, the position of the groove 35 corresponds to the position of the slots 37. At this moment, the clamping pin 38 can be embedded into the slots 37 and the groove 35, so that the high-pressure hose connector 34 can be locked onto the quick-plug connector 36 through the clamping pin 38.

The clamping pin 38 is formed by folding a complete metal strip, and comprises a lower part, a middle part and an upper part, the lower part is used for matching with the button 39, the middle part is used for being embedded into the slots 37 and the groove 35 to lock the high-pressure hose connector 34 onto the quick-plug connector 36, and the upper part is used for matching with the two inclined surfaces of the inverted trapezoidal stopper.

The button 39 is installed at the power part of the clamping pin 38. When the button 39 is pressed upwards, the upper part of the clamping pin 38 can be moved outward along the inclined surfaces, thereby strutting the clamping pin 38. At this moment, the locking relationship between the high-pressure hose connector 34 and the quick-plug connector 36 is released, meaning that the high-pressure hose connector 34 can be conveniently removed to replace the high-pressure water hose at this point.

When it is necessary to replace the high-pressure water hose, the decorative panel 33 on the left housing can be removed first, the hose replacing port 32 on the left housing will be exposed, and then the winding drum 4 is rotated. After the winding drum 4 is rotated at a certain angle, the quick-plug component 31 will be exposed from the hose replacing port 32. A user can put into one hand through the hose replacing port 32 to press the button 39, and the button 39 will drive the upper part of the clamping pin 38 to squeeze the inclined surfaces on the inverted trapezoidal stopper of the quick-plug connector 36, thereby strutting the clamping pin 38. At this moment, the high-pressure hose connector 34 can be conveniently removed from the quick-plug connector 36, and the user can remove the high-pressure hose connector 34 and then replace a new high-pressure water hose. Then, the high-pressure hose connector 34 is installed in the quick-plug connector 36, and the button 39 will automatically reset after being released, allowing the clamping pin 38 to fix the high-pressure hose connector 34 in the quick-plug connector 36 once again.

The winding drum 4, as shown in Fig. 3 and Fig. 4, is rotatably connected to an inner part inside the housing 1, the high-pressure water hose can be wound around the winding drum 4, a left side of the winding drum 4 is provided with an accommodating groove 29, a circular wall of the accommodating groove 29 is provided with a rack 30, and the rack 30 can be meshed with a second gear 7, so that when rotating, the winding drum 4 can drive the second gear 7 to rotate. Moreover, the quick-plug component 31 is fixed in the accommodating groove 29 for the high-pressure water hose to be inserted and fixed. By rotating the winding drum, the position of the quick-plug component 31 can be precisely aligned with the hose replacing port 32 on the left housing, which is convenient for users to replace the high-pressure water hose quickly.

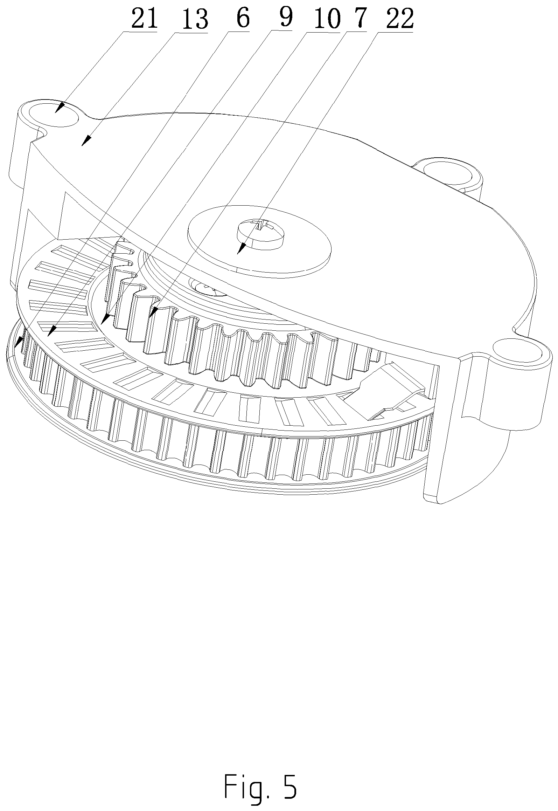

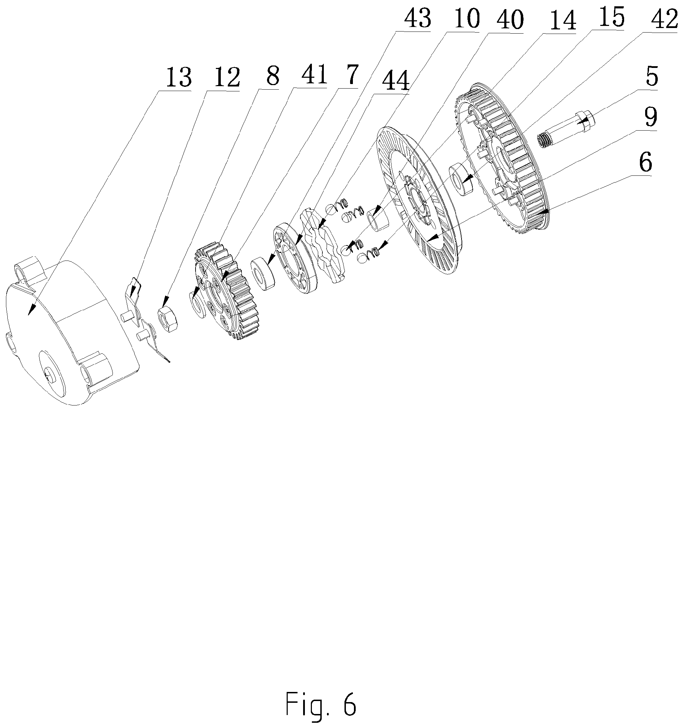

The clutch 3, as shown in Fig. 5 and Fig. 6, comprises a rotating shaft 5, a locking member 8, a first bearing 42, a second bearing 43, a bearing bracket 44, a first shaft sleeve 40, a second shaft sleeve 41, a first gear 6, a second gear 7, a first friction plate 9, a second friction plate 10, ball spring components, spring pieces 12 and a bracket 13, wherein:

The rotating shaft 5 is provided with internal threads at both ends, the internal threads at one end can be matched with a mounting column on the housing 1, the internal threads at the other end can be matched with a mounting hole on the bracket 13 through bolts, one end is externally provided with a limiting bulge, and the other end is externally provided with external threads for the first gear 6, the second gear 7, the first friction plate 9 and the second friction plate 10 to be sleeved.

The locking member 8 is in threaded fit with the external threads at the other end of the rotating shaft 5 for locking the installed clutch 3.

The first gear 6 is in transmission connection with an output shaft of the reduction gearbox through a belt, so that the speed reduction motor 2 can drive the first gear 6 to rotate when working, the first gear 6 is sleeved on the rotating shaft 5 through the first bearing 42, a lower end thereof is pressed against with the limiting bulge of the rotating shaft 5, and the first friction plate 9 is fixed at an upper end.

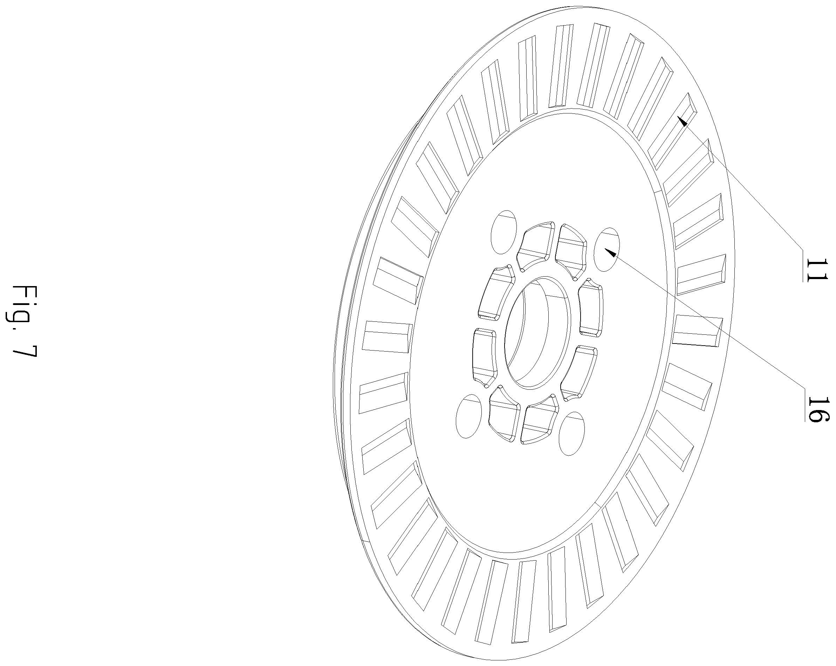

The first friction plate 9, as shown in Fig. 7, is covered on a cavity of the first gear 6, an upper end surface thereof mainly comprises an inner ring and an outer ring, the inner ring is uniformly provided with four through holes 16, balls 14 and springs 15 are accommodated in the through holes 16, the balls 14 can be extended from above the through holes 16 to press against the second friction plate 10, the outer ring is uniformly provided with a plurality of tooth grooves 11, and the cross-sectional shape of each tooth groove 11 is a right trapezoid, that is, each tooth groove 11 comprises a vertical groove wall and an inclined groove wall.

The second gear 7 is meshed with the rack 30 on the winding drum 4, so that when the user pulls out the high-pressure water hose, the winding drum 4 can be driven to rotate, so as to drive the second gear 7 to rotate. The diameter of the second gear 7 is smaller than that of the first gear 6 and is matched with the dimension of the inner ring of the first friction plate 9, so that the second gear 7 will not affect the anti-reversal of the first friction plate 9 when rotating. The second gear 7 is sleeved on the rotating shaft 5 through the second bearing 43, and the second friction plate 10 is fixed at a lower end of the second gear 7.

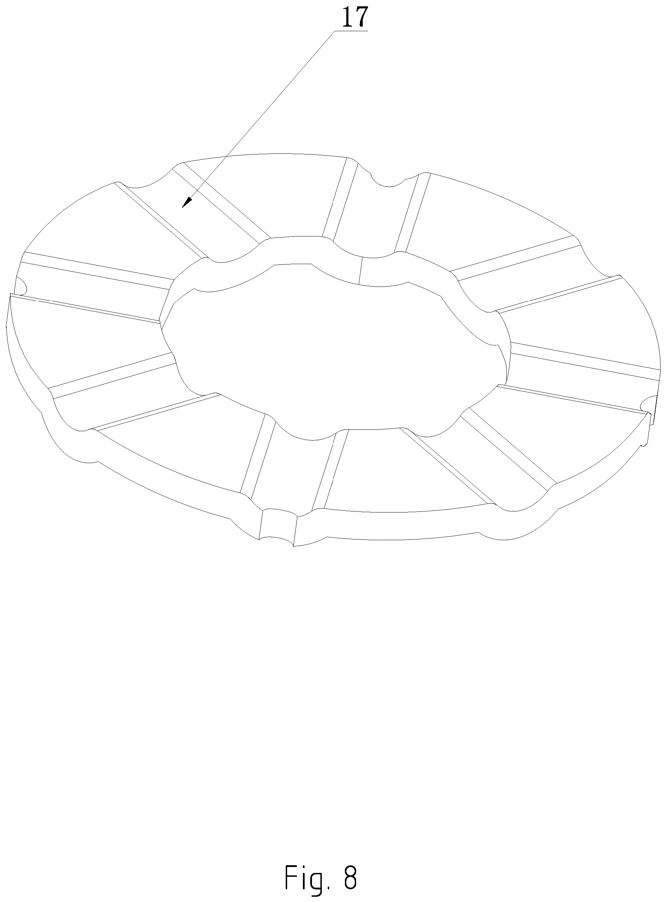

The second friction plate 10, as shown in Fig. 8, is uniformly provided with a plurality of arc grooves 17 along a circumferential direction, and the dimensions of the arc grooves 17 are matched with those of the balls 14, so that the arc grooves 17 can be used for the balls 14 to be embedded.

The bearing bracket 44 is fixed on the second gear 7, rotates synchronously with the second gear 7, and is used for the installation of the second bearing 43.

The first bearing 42 is arranged between the first gear 6 and the rotating shaft 5 and used for reducing the rotational friction of the first gear 6.

The second bearing 43 is arranged between the second gear 7 and the rotating shaft 5 and used for reducing the rotational friction of the second gear 7.

The first shaft sleeve 40 is sleeved on the rotating shaft 5 and located between the first bearing 42 and the second bearing 43, and the distance between the first bearing 42 and the second bearing 43 can be controlled by controlling the dimension of the first shaft sleeve 40, so as to control the distance between the first friction plate 9 and the second friction plate 10. In the present embodiment, the distance between the first friction plate 9 and the second friction plate 10 is controlled at 1 mm.

The second shaft sleeve 41 is sleeved on the rotating shaft 5 and located between the locking member 8 and the second bearing 43.

The number of the ball spring components is four, each ball spring component comprises a ball 14 and a spring 15 and is installed in the through hole 16 of the first friction plate, the ball 14 is extended out of the through hole 16 and pressed against the second friction plate 10, one end of the spring 15 is pressed against the interior of the first gear, the other end of the spring 15 is pressed against the ball 14, and the ball 14 is pressed against the arc groove 17 of the second friction plate 10 through the spring 15, so that a certain frictional force is maintained between the ball 14 and the second friction plate 10.

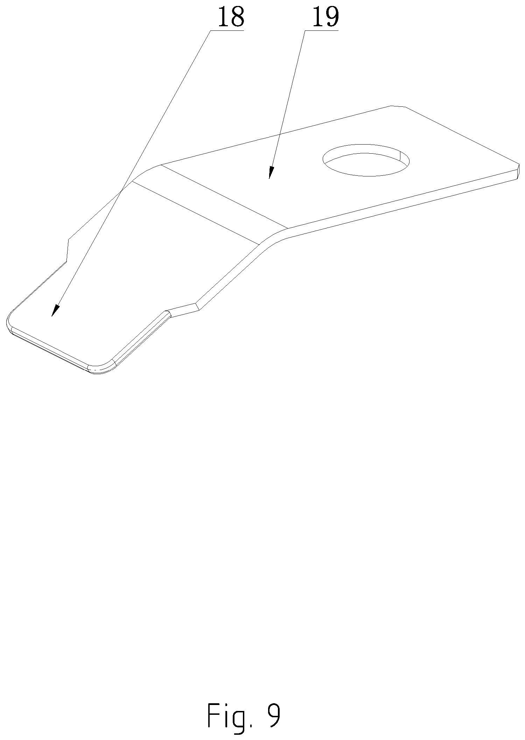

The spring pieces 12, as shown in Fig. 9, each comprise a contact part 18 and a mounting part 19 which are integrally formed, a front end of the contact part 18 is extended into the tooth groove 11 and matched with the tooth groove 11, the contact part 18 is integrally inclined, and an inclination angle thereof is larger than that of the inclined groove wall of the tooth groove 11, so that the spring pieces 12 can slide out well from the inclined groove wall. A rear end of the contact part 18 is connected with the mounting part 19, the mounting part 19 is provided with a mounting hole for installation onto the bracket 13, the number of the spring pieces 12 is two, and the two spring pieces 12 are respectively arranged on both sides of the bracket 13 and extended into the tooth grooves 11 on both sides of the first friction plate 9.

The bracket 13, in order not to impede the meshing of the second gear 7 and the rack 30, is an irregular structure, which is equivalent to a circular structure having a part missing, an outer side of the bracket 13 is provided with a baffle plate for protecting the entire clutch 3, a middle part thereof is provided with a fixed part 22, and the fixed part 22 is a hexagonal mounting hole, so after the bracket 13 is fixed on the rotating shaft 5, both are circumferentially limited; and three fixed points 21 are arranged outside the baffle plate, the three fixed points 21 form an isosceles triangle, the bracket 13 can be fixed on the housing 1 through the three fixed points 21, and two fixed positions are arranged inside for the mounting parts 19 of the spring pieces 12 to be fixed and locked.

Integral installation of the clutch 3: the ball spring components can be installed between the first gear 6 and the first friction plate 9 first, then the first gear 6 and the first friction plate 9 are locked through screws to form an integral first component, the bearing bracket 44, the second friction plate 10 and the second gear 7 are formed into a second component, and the first component, the second component, the first bearing 42, the second bearing 43, the first shaft sleeve 40 and the second shaft sleeve 41 are installed on the rotating shaft 5 and locked through the locking member 8. At this moment, the basic clutch 3 has been installed, and after installation, the distance between the first friction plate 9 and the second friction plate 10 is related to the height of the first shaft sleeve 40. In the present embodiment, after installation, the distance between the first friction plate and the second friction plate is 1 mm. In this way, the overall frictional force is quite appropriate by matching with the four ball spring components. Then, the two spring pieces 12 are installed on the bracket 13, and finally, the bracket 13 is installed on the rotating shaft 5. In this way, the entire clutch 3 is installed. At this moment, the assembled clutch 3 can be used for debugging and testing. When it is necessary to install the clutch 3 on the housing 1, the rotating shaft 5 can be installed on the mounting column on the housing 1 first, and then the fixed points 21 on the bracket 13 are installed corresponding to the mounting points on the housing 1, which is equivalent to installing the entire clutch 3 on the housing 1.

The present embodiment has the working principle as follows:
When in the winding state, the speed reduction motor 2 works to drive the reduction gearbox to work, the reduction gearbox drives the first gear 6 to rotate forward, and at this point, the spring pieces 12 will move along the inclined groove wall, meaning that the spring pieces 12 will not prevent the first gear 6 from rotating forward; and meanwhile, since the balls 14 are pressed against the second friction plate 10, the frictional force between the first gear 6 and the second gear 7 is relatively large, the first gear 6 will drive the second gear 7 to rotate when rotating, the second gear 7 will drive the winding drum 4 to rotate when rotating, and the winding drum 4 will drive the moving component 24 to move left and right when rotating, achieving uniform winding. When the high-pressure water hose is fixed (such as being stepped on or wound around something else and unable to be pulled) during the winding process, the winding drum 4 and the second gear 7 cannot rotate, the first gear 6 continues rotating, a slipping state appears between the first gear 6 and the second gear 7, and the balls 14 will slide from one arc groove 17 to another arc groove 17, meaning that at this moment, the speed reduction motor 2 is rotating, while the winding drum 4 is not rotating, which can effectively prevent damage to the speed reduction motor.

When in the unwinding state, the user pulls out the high-pressure water hose, and at this moment, the winding drum 4 will rotate to drive the second gear 7 to reverse; and although the frictional force between the second gear 7 and the first gear 6 is relatively large, since the spring pieces 12 are currently pressed against the vertical groove walls in the tooth grooves 11 on the first gear 6, the first gear 6 cannot reverse. As a result, slippage will occur between the first gear 6 and the second gear 7, which is equivalent to that the winding drum 4 is rotating to wind the hose, while the speed reduction motor 2 cannot rotate.

Although the embodiments of the present invention have been shown and described above, it will be appreciated that the above embodiments are exemplary and shall not be understood as limitations to the present invention. Those ordinary skilled in the art can make changes, amendments, replacements and variations to the above embodiments within the scope of the present invention.

Various changes and corrections will undoubtedly be apparent to those skilled in the art who have read the above description. Therefore, the attached claims shall be regarded as covering all changes and corrections to the true intent and scope of the present invention. Any and all equivalent scopes and contents within the scope of the claims shall be considered to fall within the intent and scope of the present invention.

## Claims

1. A smart wall-mounted car washer, comprising a housing (1) and a hose winding mechanism arranged in the housing (1), wherein the hose winding mechanism comprises a speed reduction motor (2), a clutch (3) and a winding drum (4), the speed reduction motor (2), the clutch (3) and the winding drum (4) are arranged in sequence along a direction of power transmission and are in transmission connection step by step, the clutch (3) comprises a rotating shaft (5), a first gear (6) and a second gear (7) which are rotatably connected to the rotating shaft (5), and a locking member (8) for limiting the two gears to the rotating shaft (5), the first gear (6) is in transmission connection with an output end of the speed reduction motor (2), the second gear (7) is in transmission connection with one side of the winding drum (4), friction plates are fixedly arranged on end surfaces of opposite sides of the two gears and are a first friction plate (9) and a second friction plate (10) respectively, ball spring components are arranged between the two friction plates, the clutch (3) further comprises an anti-reversal component, the anti-reversal component comprises tooth grooves (11) arranged on the first friction plate (9), spring pieces (12) with one end extended into the tooth groove (11) and matched with the tooth groove (11), and a bracket (13) fixed on the housing (1) and used for fixing the other end of the spring pieces (12), a wall of one side of the tooth grooves (11) is a vertical groove wall, and a wall of the other side of the tooth grooves (11) is an inclined groove wall;
when in the winding state, the speed reduction motor (2) works to drive the first gear (6) to rotate forward, the spring pieces (12) will move along the inclined groove wall, and at this moment, the first gear (6) can rotate forward;
when in the unwinding state, the winding drum (4) drives the second gear (7) to reverse, the spring pieces (12) will press against the vertical groove wall to lock the first friction plate (9), and at this moment, the first gear (6) cannot reverse.

2. The smart wall-mounted car washer according to claim 1, wherein the first friction plate (9) comprises an inner ring and an outer ring, the ball spring components comprise balls (14) and springs (15), the inner ring is uniformly provided with through holes (16) for the balls (14) to extend, one end of the springs (15) is pressed against the first gear (6), the other end of the springs (15) is pressed against the balls (14), the outer ring of the first friction plate (9) is uniformly provided with the tooth grooves (11), and the cross-sectional shape of the tooth grooves (11) is a right trapezoid.

3. The smart wall-mounted car washer according to claim 2, wherein the second friction plate (10) is uniformly provided with a plurality of arc grooves (17) along a circumferential direction for the balls (14) to be embedded.

4. The smart wall-mounted car washer according to claim 3, wherein the distance between the first friction plate (9) and the second friction plate (10) is 0.8-1.2 mm.

5. The smart wall-mounted car washer according to claim 2, wherein the number of the spring pieces (12) is two, the two spring pieces (12) are respectively arranged on both sides of the bracket (13), each spring piece (12) comprises a contact part (18) extended into the tooth groove (11) and a mounting part (19) fixed on the bracket (13), the contact part (18) is inclined, the contact part (18) and the mounting part (19) are integrally formed, and an inclination angle of the contact part (18) is greater than that of the inclined groove wall.

6. The smart wall-mounted car washer according to claim 2, wherein the bracket (13) is fixed on the housing (1) through at least three fixed points (21), and a middle part of the bracket (13) is also provided with a fixed part (22) for fixing the rotating shaft (5).

7. The smart wall-mounted car washer according to claim 1, wherein the housing (1) is provided with a hose outlet (23), an inner side of the hose outlet (23) is provided with a moving component (24) for driving a high-pressure water hose to move left and right, the moving component (24) is in transmission connection with the other side of the winding drum (4), and if the diameter of the high-pressure water hose is set to X, when the speed reduction motor (2) drives the winding drum (4) to rotate one full turn, the moving component (24) drives the high-pressure water hose to move by a distance of X.

8. The smart wall-mounted car washer according to claim 5, wherein the moving component (24) comprises a bidirectional screw rod (25) in transmission connection with the other side of the winding drum (4), a guiding component (26) used for being in threaded fit with the bidirectional screw rod (25), and a roller component (27) arranged on the guiding component (26) for reducing friction damping when the high-pressure water hose is moved.

9. The smart wall-mounted car washer according to claim 1, wherein one side of the winding drum (4) is provided with an accommodating groove (29), a rack (30) is arranged on a wall of the accommodating groove (29), the second gear (7) is meshed with the rack (30), a quick-plug component (31) for connecting the high-pressure water hose is arranged in the accommodating groove (29), the housing (1) is provided with a hose replacing port (32) in a position corresponding to the quick-plug component (31), and the housing (1) is also provided with a decorative panel (33) for covering the hose replacing port (32).

10. The smart wall-mounted car washer according to claim 7, wherein the quick-plug component (31) comprises a high-pressure hose connector (34) with a groove (35), a quick-plug connector (36) with slots (37) provided on both sides and communicated with an internal channel, a clamping pin (38) used for being embedded into the slots (37) and the groove (35) to lock the high-pressure hose connector (34) installed in the quick-plug connector (36), and a button (39) used for driving the clamping pin (38) to move and thus releasing the clamping pin (38) from the groove (35).
